# EUROPEAN PATENT APPLICATION

(11) **EP 2 849 503 A1**
(43) Date of publication of application: **18.03.2015**
(21) Application number: 14275143.7
(22) Date of filing: 30.06.2014
(51) Int. Cl.: H04W 52/02

(54) **Wake-up device in wireless network and power management method thereof**

(30) Priority: 13.09.2013 KR 20130110519
(71) Applicant: Samsung Electro-Mechanics Co., Ltd., Suwon-si, Gyeonggi-do 443-743 (KR)
(72) Inventor: Kim, Wan Su, Gyeonggi-Do 443-743 (KR); Lim, Seok Keun, Gyeonggi-Do 443-743 (KR); Namgung, Yong Gil, Gyeonggi-Do 443-743 (KR); You, Min Su, Gyeonggi-Do 443-743 (KR)
(74) Representative: Potter Clarkson LLP

(57) **Abstract**

Disclosed herein are a wake-up device in a wireless network and a power management method thereof. An exemplary embodiment proposes a wake-up device in a wireless network including: a boosting unit supplied with power from a battery and boosting the power; a charging unit charged by being supplied with an output of the boosting unit; and a control unit monitoring a voltage of the charging unit, using a voltage charged from the boosting unit, shutting-down the boosting unit immediately before a wake-up mode is switched to a sleep mode, when the wake-up mode is switched to the sleep mode, or when the charging unit is charged with the first reference voltage or more to use the charging voltage of the charging unit as power, and re-operating the boosting unit when the charging voltage is equal to or less than a second reference voltage during the use of the charging voltage.

## Description

### CROSS REFERENCE(S) TO RELATED APPLICATIONS

This application claims the foreign priority benefit of Korean Patent Application Serial No. 10-2013-0110519, entitled "Wake-Up Device In Wireless Network And Power Management Method Thereof" filed on September 13, 2013, which is hereby incorporated by reference in its entirety into this application.

### BACKGROUND OF THE INVENTION

### 1. Technical Field

The present invention relates to a wake-up device and a power management method thereof. More particularly, the present invention relates to a wake-up device of a wireless network additionally including a boosting unit to be able to efficiently use a battery residual quantity and a power management method thereof.

### 2. Description of the Related Art

In a wireless network environment such as ZigBee, an end terminal repeats a wake-up mode and a sleep mode, performs a general operation at the time of the wake-up mode, and maintains minimum power in a standby state at the time of the sleep mode. For example, tag terminals such as a wake-up device in a ZigBee wireless network are present even in an electronic shelf label (ESL) system. In this case, in the tag terminal of the electronic shelf label system, product information such as a price update is updated at the time of the wake-up mode by using a wireless sensor network.

Since the wake-up device in the wireless network environment such as the tag terminal of the electronic shelf label system uses a battery, the wake-up device is in a sleep state in most of the time to implement a low power system and for example, periodically wakes-up or wakes-up depending on the reception of a wake-up signal to perform required operations. For example, the tag terminal of the electronic shelf label system is in the sleep mode state in most of the time and then periodically wakes-up to communicate with a sync. However, the tag terminal is in the sleep mode state in most of the time and power consumption in the sleep mode state is generally about 70%.

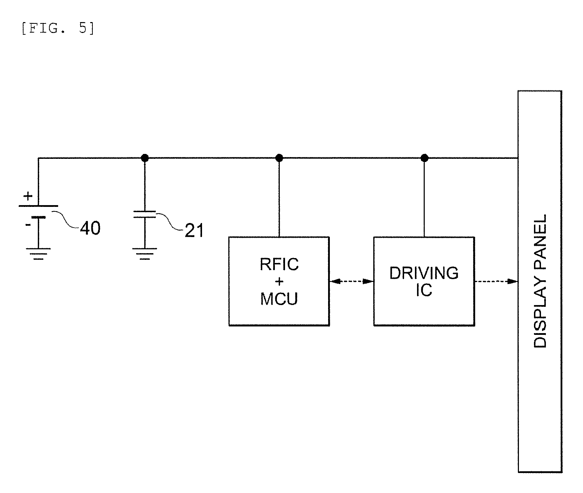

FIG. 5 illustrates an example of a wake-up device in a wireless network environment according to the related art. For example, a tag terminal of an electronic shelf label (ESL) system as illustrated in FIG. 5 does not have a separate power management circuit and uses a battery 40 as power to directly supply power to SoC [RFIC + MCU], a driving IC, and the like. In this case, in characteristics of the ESL tag terminal, the ESL tag terminal is usually in a sleep mode state in which power is little consumed and is often in a wake up operation state to transmit and receive information to and from a gateway. At the time of the operation of the ESL tag terminal, a voltage drop occurs due to an internal resistance and for example, the related art uses only approximately 30% of capacity of the battery 40 and does not use approximately 70% of capacity of the battery 40, due to the voltage drop.

### [Related Art Document]

### [Patent Document]

(Patent Document 1) International Patent Laid-Open Publication No. 2008/149621 (Published on December 11, 2008)

### SUMMARY OF THE INVENTION

An object of the present invention is to provide a wake-up device of a wireless network additionally including a boosting unit to be able to efficiently use a battery residual quantity and a power management method thereof.

In this case, a technology of monitoring a charging voltage of a charging unit and efficiently managing power from a battery by interrupting or resuming a supply of power from a battery depending on the monitored result has been proposed.

According to an exemplary embodiment of the present invention, there is provided a wake-up device in a wireless network, including: a boosting unit supplied with power from a battery and boosting the power; a charging unit charged by being supplied with an output of the boosting unit; and a control unit monitoring a charging voltage of the charging unit, using a voltage charged from the boosting unit as power, shutting-down the boosting unit immediately before a wake-up mode is switched to a sleep mode, when the wake-up mode is switched to the sleep mode, or when the charging unit is charged with a first reference voltage or more, to use the charging voltage of the charging unit as power, and re-operating the boosting unit when the charging voltage is equal to or less than a second reference voltage during the use of the charging voltage.

During operation of the sleep mode, the control unit may use the voltage charged from the boosting unit as a sleep mode power when the boosting unit is re-operated depending on the second reference voltage or less and may again shut-down the boosting unit when the charging voltage is equal to or larger than the first reference voltage to use the charging voltage as the sleep mode power.

The wake-up device in a wireless network may further include: a display unit using the voltage charged from the boosting unit at the time of an operation of the boosting unit or the charging voltage of the charging unit at the time of the shut-down of the boosting unit as power and displaying information according to the control of the control unit.

The control unit may keep or switch the boosting unit in or to an operation state at the time of the operation of the wake-up mode and use the voltage charged from the boosting unit as a wake-up mode power.

The control unit may use the charging voltage as the wake-up mode power when the sleep mode is switched to the wake-up mode during the use of the charging voltage as a sleep mode power, continuously perform the monitoring, and re-operate the boosting unit when the charging voltage is equal to or less than the second reference voltage.

According to another exemplary embodiment of the present invention, there is provided a wake-up device in a wireless network, including: a switch unit connected to a battery and interrupting a supply of power from the battery or supplying power from the battery to a boosting unit or a charging unit depending on switching; a boosting unit supplied with the power from the battery through the switch unit and boosting the power; a charging unit directly supplied with the power from the battery through the switch unit or charged by being supplied with the output of the boosting unit; and a control unit monitoring a charging voltage of the charging unit, using a voltage charged in the charging unit as power, turning off the switch unit immediately before a wake-up mode is switched to a sleep mode, when the wake-up mode is switched to the sleep mode, when the charging unit charged by the boosting unit is charged with the first reference voltage or more, or when the charging unit directly charged through the switch unit is charged with a third reference voltage or more to interrupt a supply of power from the battery and use the charging voltage of the charging unit as power, and turning on the switch unit when the charging voltage is equal to or less than a second reference voltage during the use of the charging voltage to perform a control to charge the charging unit from the boosting unit or directly charge the charging unit through the switch unit.

The first reference voltage may be larger than or equal to the third reference voltage and the control unit may initially perform a control to directly charge the charging unit through the switch unit and control the switch unit at the time of currently charging the charging unit and at the time of the subsequent charging when the direct charging voltage of the charging unit through the switch unit does not reach the third reference voltage to charge the charging unit from the boosting unit.

During operation of the sleep mode, the control unit may use the voltage charged from the boosting unit or directly charged through the switch unit as a sleep mode power according to a turn on of the switch unit depending on the second reference voltage or less and may again turn off the switch unit when the charging voltage through the boosting unit is equal to or larger than the first reference voltage or when the charging voltage directly charged through the switch unit is equal to or larger than the third reference voltage to use the charging voltage as the sleep mode power.

The wake-up device in a wireless network may further include: a display unit using the voltage charged from the boosting unit or directly charged through the switch unit at the time of a turn on operation of the switch unit or the charging voltage of the charging unit at the time of a turn off of the switch unit as power and displaying information according to the control of the control unit.

The control unit may keep the turn on-operation state of the switch unit or switch the switch unit to an turn on-operation state at the time of a wake-up mode operation, and use the voltage charged from the boosting unit or the voltage directly being charged through the switch unit as a wake-up mode power.

The control unit may use the charging voltage as the wake-up mode power when the sleep mode is switched to the wake-up mode during the use of the charging voltage as the sleep mode power, continuously perform the monitoring, and perform a control to charge the charging unit from the boosting unit or directly charge the charging unit through the switch unit when the charging voltage is equal to or less than the second reference voltage.

The boosting unit may be a booster DC-DC converter and the charging unit may be a high-capacity capacitor or a high-capacity secondary battery.

The wake-up device may be a tag terminal in an electronic shelf label system.

According to still another exemplary embodiment of the present invention, there is provided a power management method of a wake-up device in a wireless network, including: using power from a battery in which a boosting unit is supplied with the power from the battery and boosts the power, a charging unit is charged by being supplied with an output of the boosting unit, and uses a voltage charged from the boosting unit as power of a control unit; using charging power in which the control unit monitors a charging voltage of the charging unit and shuts-down the boosting unit immediately before a wake-up mode is switched to a sleep mode, when the wake-up mode is switched to the sleep mode, or when the charging unit is charged with the first reference voltage or more to use the charging voltage of the charging unit as power of the control unit; and reusing the power from the battery in which the control unit re-operates the boosting voltage when the charging voltage is equal to or less than a second reference voltage during the use and monitoring of the charging voltage.

In the reusing of the power from the battery, the control unit may use the voltage charged from the boosting unit as a sleep mode power at the time of the re-operation of the boosting unit during operation of the sleep mode, and when the charging voltage of the charging unit charged in the reusing of the power from the battery is equal to or larger than the first reference voltage, the control unit may again shut-down the boosting unit and use the charging voltage as the sleep mode power.

The using of the charging power may be performed depending on the switching to the sleep mode and in the reusing of the battery power, when the sleep mode is switched to the wake-up mode, the control unit may re-operate the boosting unit and use the voltage charged from the boosting unit as a wake-up mode power.

According to still yet another exemplary embodiment of the present invention, there is provided a power management method of a wake-up device in a wireless network, including: using power from a battery in which the power from the battery is directly supplied to a charging unit to charge the charging unit or supplied to a boosting unit to charge the charging unit with a voltage boosted by the boosting unit, according to a turn on-operation of a switch unit connected to the battery, and the voltage charged in the charging unit is used as power of a control unit; using charging power in which the control unit monitors a charging voltage of the charging unit, turns off the switch unit immediately before a wake-up mode is switched to a sleep mode, when the wake-up mode is switched to the sleep mode, when the charging unit charged by the boosting unit is charged with the first reference voltage or more, or when the charging unit directly charged through the switch unit is charged with a third reference voltage or more to interrupt a supply of power from the battery and use the charging voltage of the charging unit as power of the control unit; and reusing the power from the battery in which the control unit turns on the switch unit when the charging voltage of the charging unit is equal to or less than a second reference voltage during the use and monitoring of the charging voltage to perform a control to directly charge the charging unit through the switch unit or charge the charging unit from the boosting unit.

The first reference voltage may be larger than or equal to the third reference voltage, in an initial using of the power from the battery, the control unit may perform a control to directly charge the charging unit through the switch unit, in the using of an initial charging power, the control unit may use the charging voltage as power immediately before the wake-up mode is switched to the sleep mode, when the wake-up mode is switched to the sleep mode, or when the charging unit directly charged through the switch unit is charged with the third reference voltage or more, and in an initial reusing of the power from the battery, the control unit may perform a control to directly charge the charging unit through the switch unit and reuses the charging voltage; and reusing the power from the battery, and when the direct charging voltage of the charging unit through the switch unit does not reach the third reference voltage during the repetitive circulation of the reusing of the power from the battery and the using of the charging power, the control unit may control the switch unit at the time of currently charging the charging unit and at the time of charging the charging unit in the reusing of the power from the battery depending on the repetitive circulation thereafter to perform a control to charge the charging unit from the boosting unit and reuse the charging voltage.

In the reusing of the power from the battery, during operation of the sleep mode, the control unit may use the voltage charged from the boosting unit or directly charged through the switch unit depending on the turn on of the switch unit as the sleep mode power, and in the reusing of the power from the battery, the control unit may again turn off the switch unit to use the charging voltage as the sleep mode power when the charging voltage charged through the boosting unit is equal to or larger than the first reference voltage or when the voltage directly charged through the switch unit is equal to or larger than the third reference voltage.

The using of the charging power may be performed depending on the switching to the sleep mode and in the reusing of the power from the battery, when the sleep mode is switched to the wake-up mode, the control unit may switch the switch unit to a turn on-operation state and use the voltage charged from the boosting unit or directly charged through the switch unit as a wake-up mode power.

### BRIEF DESCRIPTION OF THE DRAWINGS

FIGS. 1A and 1B each are diagrams schematically illustrating a wake-up device in a wireless network according to an exemplary embodiment of the present invention.
FIGS. 2A and 2B each are diagrams schematically illustrating a wake-up device in a wireless network according to another exemplary embodiment of the present invention.
FIG. 3A is a flow chart schematically illustrating a power management method of a wake-up device in a wireless network according to an exemplary embodiment of the present invention.
FIG. 3B is a flow chart schematically illustrating a part of a power management method of a wake-up device in a wireless network according to another exemplary embodiment of the present invention.
FIG. 4A is a flow chart schematically illustrating a power management method of a wake-up device in a wireless network according to still another exemplary embodiment of the present invention.
FIGS. 4B and 4C each are flow charts schematically illustrating a part of a power management method of a wake-up device in a wireless network according to still yet another exemplary embodiment of the present invention.
FIG. 5 is a diagram schematically illustrating a wake-up device in a wireless network according to the related art.

### DESCRIPTION OF THE PREFERRED EMBODIMENTS

Exemplary embodiments of the present invention for accomplishing the above-mentioned objects will be described with reference to the accompanying drawings. In describing exemplary embodiments of the present invention, the same reference numerals will be used to describe the same components and an additional description that is overlapped or allow the meaning of the present invention to be restrictively interpreted will be omitted.

In the specification, it will be understood that unless a term such as 'directly' is not used in a connection, coupling, or disposition relationship between one component and another component, one component may be 'directly connected to', 'directly coupled to' or 'directly disposed to' another element or be connected to, coupled to, or disposed to another element, having the other element intervening therebetween.

Although a singular form is used in the present description, it may include a plural form as long as it is opposite to the concept of the present invention and is not contradictory in view of interpretation or is used as clearly different meaning. It should be understood that "include", "have", "comprise", "be configured to include", and the like, used in the present description do not exclude presence or addition of one or more other characteristic, component, or a combination thereof.

In the present specification, expressions, such as 'first reference voltage', 'second reference voltage', and 'third reference voltage' are used to be differentiated from each other and do not mean sameness or differentiation of each value.

First, a wake-up device in a wireless network according to a first aspect of the present invention will be described in detail with reference to the accompanying drawings. Herein, reference numerals which are not illustrated in the referenced drawings may be reference numerals in other drawings which illustrate the same components.

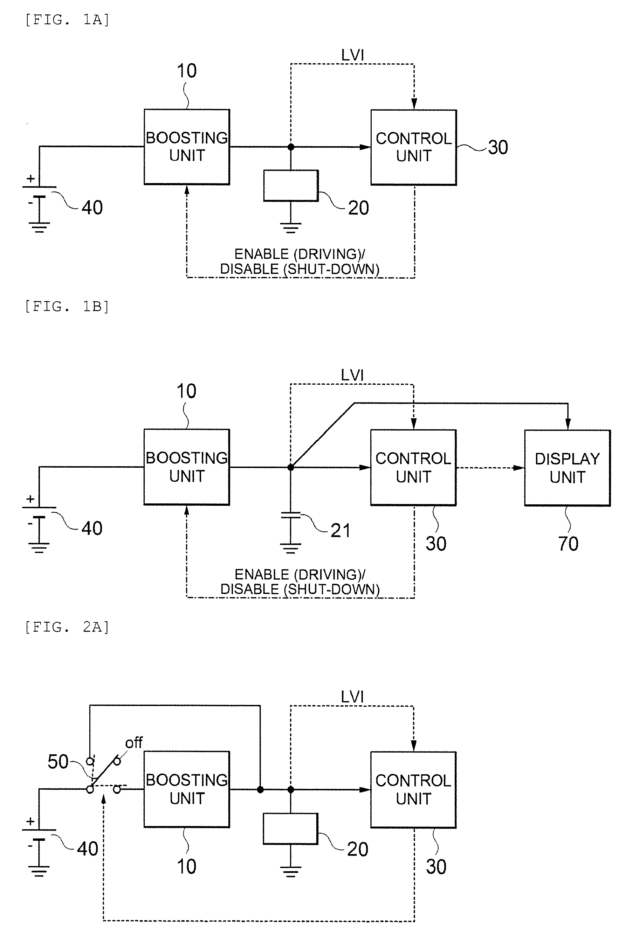

FIGS. 1A and 1B each are diagrams schematically illustrating a wake-up device in a wireless network according to an exemplary embodiment of the present invention.

Referring to FIGS. 1A or/and 1B, the wake-up device in the wireless network according to an exemplary embodiment of the present invention includes a boosting unit 10, a charging unit 20, and a control unit 30. For example, referring to FIG. 1, a wake-up device in a wireless network may further include a display unit 70. Further, referring to FIGS. 1A or/and 1B, in one example, the wake-up device in the wireless network further includes a battery 40.

For example, the wake-up device in the wireless network may be a tag terminal in an electronic shelf label system.

Each component will be described. First, the wake-up device in the wireless network according to an exemplary embodiment of the present invention includes the battery 40. The battery 40 supplies power consumed in a control unit 30, and the like. The battery 40 may be, for example, a primary battery such as a mercury battery and a lithium battery, a secondary battery such as a nickel-cadmium battery, a lithium ion battery, a nickel-hydrogen battery, and a lithium polymer battery, or a solar cell.

Next, referring to FIGS. 1A or/and 1B, the boosting unit 10 is supplied with power from the battery 40 and boost the power from the battery. The boosting unit 10 boosts and outputs the power from battery and charges the charging unit 20 with the boosted power. In this case, the boosting unit 10 may boost the power from the battery 40 to perform a wake-up operation, a sleep mode operation, or the like of the wake-up device even when a residual voltage of the battery 40 is less than a predetermined value, for example, is insufficient to perform the wake-up operation, the sleep mode operation, or the like of the wake-up device and charge the charging unit 20 with the boosted power. According to the related art, when a capacity of the battery 40 is generally reduced less than approximately 70%, there may be insufficient to perform the wake-up operation of the wake-up device. However, according to an exemplary embodiment of the present invention, the boosting unit 10 boosts a residual capacity of the battery 40 and supplies power and charges the charging unit 20 with the boosted power, thereby increasing the efficiency of the battery 40. In particular, the general battery 40 has more reduced efficiency at a low temperature and therefore when the exemplary embodiment of the present invention is applied at a low temperature, the efficiency of the battery may be more increased.

For example, the boosting unit 10 may be a booster DC-DC converter.

Referring to FIGS. 1A or/and 1B, the power from the battery 40 is not supplied to the control unit 20, but is supplied to control unit 20 via the boosting unit 10, for example a boost-up DC/DC converter which is inserted therebetween. The boosting unit 10 is implemented to boost power in a range which is higher than a reference voltage or a highest voltage but lower than a highest operation voltage of the control unit 30. In this case, even though there is a voltage drop of a supply voltage through the boosting unit 10, for example, the boost DC/DC converter, an output of the boosting unit 10, for example, output of the boost DC/DC converter is made in a range in which the control unit 30 may be operated. Therefore, compared to the related art, the capacity of the battery 40 may be more used and the operation lifespan of the battery may be more extended.

However, the highest efficiency of the boosting unit 10, for example, the boost DC/DC converter is generally about 90%. Since the wake-up device, for example, the tag terminal of the electronic shelf label (ESL) consumes a very low power in a sleep mode, when the boosting unit 10, for example, the boost DC/DC converter is always turned-on, the power consumed in the boosting unit 10, for example, the boost DC/DC converter may not be disregarded.

Therefore, as illustrated in FIGS. 1A or/and 1B, the control unit 30 to be described below may perform a power management by monitoring a low voltage indicator (LVI) and performing a shut-down or an operation control of the boosting unit 10 using, for example, a general purpose input/output port (GIPO).

Next, the charging unit 20 is charged by being supplied with an output voltage of the boosting unit 10. For example, in this case, a chargeable voltage of the charging unit 20 is higher than a voltage of the battery 40. The charging unit 20 is charged with power boosted by the boosting unit 10, such that even when the residual voltage of the battery 40 is less than a predetermined value, the wake-up operation, the sleep mode operation, or the like of the wake-up device may be performed by the charging voltage charged with the boosted power.

For example, the charging unit 20 may be a high-capacity capacitor 21 or a high-capacity secondary battery. In one example, the charging unit 20 may be a super capacitor or an electric double layer capacitor.

Next, the control unit 30 will be described with reference to FIGS. 1A or/and 1B. The control unit 30 monitors the voltage of the charging unit 20. When the charging unit 20 is charged from the boosting unit 10, the control unit 30 uses a charging voltage as power. In this case, the control unit 30 is connected to an upper end of the charging unit 20 to use the voltage charged in the charging unit 20 as power and monitors the voltage of the charging unit 20.

Further, the control unit 30 shuts-down the boosting unit 10 immediately before the wake-up mode is switched to the sleep mode, when the wake-up mode is switched to the sleep mode, or when the charging unit 20 is charged with a first reference voltage or more and uses the charging voltage of the charging unit 20 as power. For example, when the wake-up mode is switched to the sleep mode depending on the ending of the wake-up mode while the voltage charged from the boosting unit 10 is used as power in the wake-up mode, the control unit 30 completes the operation of the wake-up device in the wake-up mode and then shuts-down the boosting unit 10 to prevent the power from the battery from being consumed and switches the wake-up mode to the sleep mode to use the charging voltage of the charging unit 20 as the sleep mode power. For example, the control unit 10 shuts-down the boosting unit 10 before the wake-up mode is switched to the sleep mode and may switch the wake-up mode to the sleep mode. Further, the control unit may shut-down the boosting unit 10 when the wake-up mode is switched to the sleep mode. Further, when the voltage charged in the charging unit 20 is equal to or more than the first reference voltage during the monitoring of the voltage of the charging unit 20, the control unit 30 shuts-down the boosting unit 10 to prevent the power from the battery from being consumed and uses the charging voltage of the charging unit 20 as the power.

In this case, the first reference voltage is higher than a subsequent second reference voltage. For example, the first reference voltage may be a full charging voltage of the charging unit 20 or may be a predetermined voltage which is larger than a minimum voltage to perform the wake-up operation, the sleep mode operation, or the like of the wake-up device and smaller than an operation maximum voltage of the control unit 30. For example, the first reference voltage is the predetermined voltage which is larger than the minimum voltage to perform the wake-up operation, the sleep mode operation, or the like of the wake-up device and smaller than the operation maximum voltage of the control unit 30 and may be changed to be gradually reduced depending on the charging and discharging repetition of the charging unit 20.

Further, the control unit 30 re-operates the boosting unit 10 during the use of the charging voltage of the charging unit 20 when the charging voltage is equal to or less than the second reference Voltage. In this case, the second reference voltage may be, for example, a minimum voltage to perform the wake-up operation or the sleep mode operation of the wake-up device or a large voltage as much as a predetermined buffer section. Therefore, when the charging voltage of the charging unit 20 is equal to or less than the second reference voltage, the boosting unit 10 is re-operated to boost the power from the battery, charge the boosted voltage in the charging unit 20, in which the charged voltage is supplied as the power of the control unit 30.

For example, when the charging voltage of the charging unit 20 is equal to or less than the second reference voltage, the re-operation control of the boosting unit 10 may be performed in the sleep mode or/and the wake-up mode. In the present specification, the sleep mode means the state in which the wake-up device waits for the wake-up signal or waits for the next wake-up period by a timer, for example, a standby state minimizing power consumption. The wake-up mode means an operation state, and the like in which the wake-up device is woken in the sleep mode state to perform communication with an external terminal.

For example, the control unit 30 may have power consumption changed depending on the sleep mode operation and the wake-up mode operation. Components in the control unit 30 which wait for the wake-up signal or only minimum components such as a timer checking a wake-up period are operated at the time of the sleep mode operation, such that power consumption may be more reduced than that at the time of the wake-up operation.

In one example, during operation of the sleep mode, the control unit 30 uses the voltage charged from the boosting unit 10 as the sleep mode power when the boosting unit 10 is re-operated depending on the second reference voltage or less. To be continue, when the charging voltage of the charging unit 20 charged depending on the re-operation of the boosting unit 10 is equal to or more than the first reference voltage, the control unit 30 again shuts-down the boosting unit 10 to interrupt the supply of power from the battery and uses the charging voltage of the charging unit 20 as the sleep mode power. For example, in the case of the tag terminal of the electronic shelf label (ESL) system, since the power consumption at the time of the sleep mode is generally about 70%, the power consumption at the time of the sleep mode according to the present embodiment may be remarkably reduced.

For example, referring to FIGS. 1A and/or 1B, the power source of the battery 40 at the time of the first operation operates the control unit 30 using the boosting unit 10, for example, the boost-up DC/DC converter to operate the wake-up device. For example, the operated wake-up device is switched to the sleep mode. In this case, the control unit 30 interrupts or disables the boosting unit 10, for example, the boost-up DC/DC converter before entering the sleep mode. The boosting unit 10, for example, the boost-up DC/DC converter is shut-down, and therefore the boosting unit 10, for example, the boost-up DC/DC converter does not supply power to the control unit 30. However, since a current of several A is consumed at the time of the sleep mode, the voltage charged in the charging unit 20, for example, a high-capacity capacitor is used as the power source. In this case, a voltage level of the charging unit 20, for example, the high-capacity capacitor is always monitored by a low voltage indicator (LVI) of the control unit 30, for example, the MCU. When the voltage level drops to the specific voltage level or less or less than the second reference voltage, the control unit 30, for example, the MCU operates or enables, for example, the boost DC/DC converter. In this case, the control unit 30, for example, the MCU charges the charging unit 20, for example, the high-capacity capacitor and then shuts-down or disables the boosting unit 10, for example, the boost DC/DC converter and again enters the sleep mode. Therefore, a power management circuit is implemented and thus it is possible to more extend the lifespan of the battery than the case in which the boosting unit 10, for example, the boost DC/DC converter is simply inserted between the battery 40 and the control unit 30 even when the same battery 40 and the boosting unit 10, for example, the boost DC/DC converter are used.

In one example, referring to FIG. 1B, the wake-up device in the wireless network may further include a display unit 70. In this case, the display unit 70 uses the voltage charged from the boosting unit 10 at the time of the operation of the boosting unit 10 or the charging voltage of the charging unit 20 at the time of the shut-down of the boosting unit 10 as power and displays the information according to the control of the control unit 30. For example, the display unit 70 may be operated only in the wake-up mode. For example, the display unit 70 includes, for example, an electronic paper panel which keeps an image at the time of power off to display the information change and the update information such as price only in the wake-up mode and may keep the previous image information in the power off state when the wake-up mode is switched to the sleep mode.

Further, although not illustrated, the wake-up device in the wireless network may further include a communication unit which communicates with the gateway, the sync, or the like in the wireless network, in which the communication unit may use, as power, the voltage charged from the boosting unit 10 at the time of the operation of the boosting unit 10 or the charging voltage of the charging unit 20 at the time of the shut-down of the boosting unit 10.

Further, in one example, the control unit 30 may keep or switch the boosting unit 10 in or to an operation state at the time of the wake-up mode operation and may use the voltage charged from the boosting unit 10 as the wake-up mode power. For example, the control unit 30 re-operates the boosting unit 10 when the sleep mode is switched to the wake-up mode while the charging voltage of the charging unit 20 is used as power depending on the sleep mode operation and receives the power from the battery to be able to use the boosted power as the wake-up mode power. For example, after the sleep mode is switched to the wake-up mode, the boosting unit 10 is re-operated. Further, when the charging voltage of the charging unit 20 drops to the second reference voltage or less during the sleep mode operation and thus the sleep mode is switched to the wake-up mode during the re-operation of the boosting unit 10, the control unit 30 keeps the operation state of the boosting unit 10 and may use the voltage charged from the boosting unit 10 as the wake-up mode power.

Further, in another example, the control unit 30 may use the charging voltage of the charging unit 20 as the wake-up mode power when the sleep mode is switched to the wake-up mode while the charging voltage is used as the sleep mode power, continuously perform the monitoring, and re-operate the boosting unit 10 when the charging voltage of the charging unit 20 is equal to or less than the second reference voltage.

Next, a wake-up device in a wireless network according to a second aspect of the present invention will be described in detail with reference to the accompanying drawings. In this case, the wake-up device in the wireless network according to the first aspect of the present invention as described above and FIGS. 1A and 1B may be referenced and therefore the repeated description thereof may be omitted.

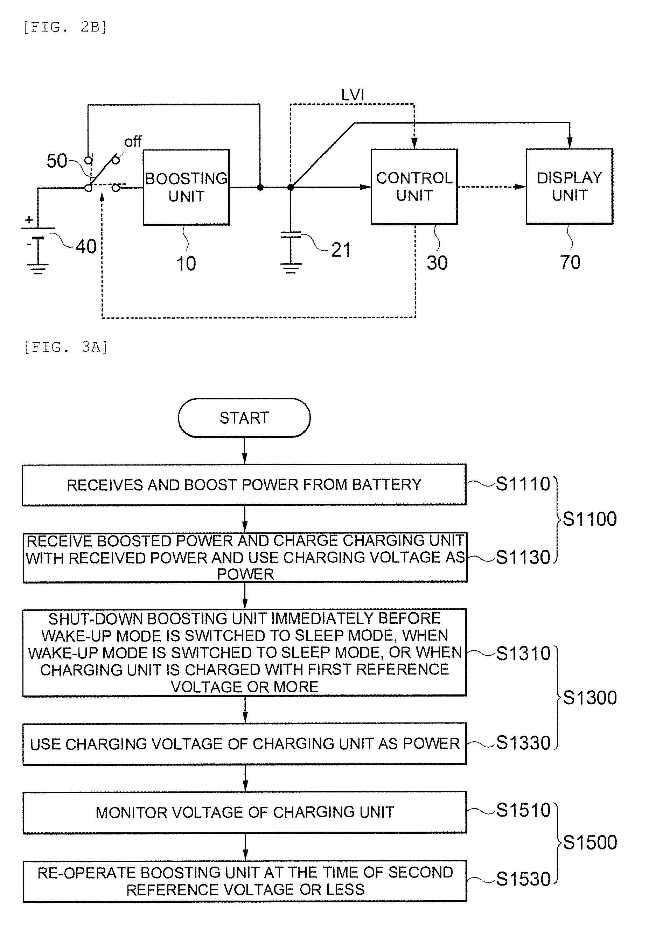

FIGS. 2A and 2B each are diagrams schematically illustrating a wake-up device in a wireless network according to another exemplary embodiment of the present invention.

Referring to FIGS. 2A or/and 2B, the wake-up device in the wireless network according to an exemplary embodiment of the present invention includes a switch unit 50, the boosting unit 10, the charging unit 20, and the control unit 30. For example, referring to FIG. 2B, the wake-up device in the wireless network may further include the display unit 70. Further, referring to FIGS. 2A or/and 2B, in one example, the wake-up device in the wireless network further includes the battery 40.

For example, the wake-up device in the wireless network may be the tag terminal in the electronic shelf label system.

Describing in detail each component with reference to FIGS. 2A or/and 2B, first, the wake-up device in the wireless network depending on one example includes the battery 40. The battery 40 may be, for example, a primary battery, a secondary battery, or a solar cell.

Next, referring to FIGS. 2A or/and 2B, the switch unit 50 is connected to the battery 40 and performs a switching operation depending on the control of the control unit 30 to interrupt the supply of power or supply the power from the battery to the boosting unit 10 or the charging unit 20. The switching operation of the switch unit 50 may be divided into an off operation to interrupt the supply of power from the battery, a first turn on-operation to supply the power from the battery to the charging unit 20, and a second turn on-operation to supply the power from the battery to the boosting unit 10. For example, the switch unit 50 may be configured of a MOS FET switch.

For example in one example, first, the switch unit 50 may directly charge the power from the battery in the charging unit 20 depending on the control of the control unit 30.

Next, referring to FIGS. 2A or/and 2B, the boosting unit 10 is supplied with the power from the battery through the switch unit 50 and boost the power from the battery. The boosting unit 10 boosts and outputs the power from the battery supplied through the switch unit 50 and charges the charging unit 20 with the boosted power.

For example, the boosting unit 10 may be the booster DC-DC converter.

Next, referring to FIGS. 2A or/and 2B, the charging unit 20 is directly supplied with the power from the battery through the switch unit 50 and is charged by being supplied with the output of the boosting unit 10. For example, in this case, the chargeable voltage of the charging unit 20 is higher than the voltage of the battery 40. For example, when the residual voltage of the battery 40 is equal to or more than a predetermined value, the charging unit 20 is directly supplied and charged with the power from the battery through the switch unit 50 and when the residual voltage of the battery 40 is less than a predetermined value, is charged with power boosted by the boosting unit 10, such that for example, the wake-up operation, the sleep mode operation, or the like of the wake-up device may be performed by the charged voltage.

For example, the charging unit 20 may be the high-capacity capacitor 21 or the high-capacity secondary battery. In one example, the charging unit 20 may be the super capacitor or the electric double layer capacitor.

Next, the control unit 30 will be described in detail with reference to FIGS. 2A or/and 2B. The control unit 30 monitors the voltage of the charging unit 20. When the control unit 20 performs a turn on operation of the switch unit 50, the control unit 30 uses the voltage charged in the charging unit 20 as power. For example, when the switch unit 50 is in a first turn on-operation state by the control unit 30, the power from the battery is directly charged in the charging unit 20 through the switch unit 50 and the charging voltage is used as the power of the control unit 30 and when the switch unit 50 is in a second turn on-operation state, the charging from the boosting unit 10 to the charging unit 20 is performed and the charging voltage is used as the power of the control unit 30.

Further, immediately before the wake-up mode is switched to the sleep mode, when the wake-up mode is switched to the sleep mode, when the charging unit 20 charged by the boosting unit 10 is charged with the first reference voltage or more or the charging unit 20 directly charged through the switch unit 50 is charged with a third reference voltage or more, the control unit 30 turns off the switch unit 50 to interrupt the supply of power from the battery and use the charging voltage of the charging unit 20 as power. In this case, the first reference voltage and the third reference voltage are higher than a subsequent second reference voltage.

For example, when the wake-up mode is switched to the sleep mode depending on the ending of the wake-up mode during the use of the voltage charged in the charging unit 20 in the wake-up mode as power, the control unit 30 turns off the switch unit 50 to interrupt the supply of power from the battery 40 and use the charging voltage of the charging unit 20 as the sleep mode power. For example, the control unit 30 turns-off the switch unit 50 before the wake-up mode is switched to the sleep mode and may switch the wake-up mode to the sleep mode. Further, the control unit may turn off the switch unit 50 when the wake mode is switched to the sleep mode. Further, when the charging unit 20 charged by the boosting unit 10 is equal to or more than the first reference voltage during the monitoring of the voltage of the charging unit 20, the control unit 30 turns off the switch unit 50 to interrupt the supply of power from the battery 40 and uses the charging voltage of the charging unit 20 as the power. Further, when the charging unit 20 directly charged through the switch unit 50 is equal to or more than the third reference voltage during the monitoring of the voltage of the charging unit 20, the control unit 30 turns off the switch unit 50 to interrupt the supply of power from the battery and uses the charging voltage of the charging unit 20 as the power.

For example, the first reference voltage may be larger than or equal to the third reference voltage. In this case, the first reference voltage may be the full charging voltage of the charging unit 20 or may be a predetermined voltage which is larger than the minimum voltage to perform the wake-up operation, the sleep mode operation, or the like of the wake-up device and smaller than the operation maximum voltage of the control unit 30. Further, the third reference voltage may be a voltage which is equal to the reference voltage of the battery 40 or may be, for example, a predetermined voltage which is larger than the minimum voltage to perform the wake-up operation, the sleep mode operation, or the like of the wake-up device and smaller than the operation maximum voltage of the control unit 30 and the reference voltage of the battery 40. For example, the first reference voltage and/or the third reference voltage is the predetermined voltage which is larger than the minimum voltage to perform the wake-up operation, the sleep mode operation, or the like of the wake-up device and may be changed to be gradually reduced depending on the charging and discharging repetition of the charging unit 20.

Further, when the charging voltage is equal to or less than the second reference voltage during the use of the charging voltage, the control unit 30 turns on the switch unit 50 to perform a control to charge the charging unit 20 from the boosting unit 10 or directly charge the charging unit 20 through the switch unit 50. In this case, the second reference voltage may be, for example, a minimum voltage to perform the wake-up operation or the sleep mode operation of the wake-up device or a large voltage as much as a predetermined buffer section than minimum voltage. Therefore, when the charging voltage of the charging unit 20 is equal to or less than the second reference voltage, the switch unit 50 is turned on to directly charge the power from the battery in the charging unit 20 through the switch unit 50 or supply the power from the battery to the boosting unit 10 through the switch unit 50 and boost the boosting unit 10 so as to charge the charge unit 20. Further, power charging the charging unit 20 is supplied to the control unit 30.

For example, when the charging voltage of the charging unit 20 is equal to or less than the second reference voltage, the turn on operation control of the boosting unit 50 may be performed in the sleep mode or/and the wake-up mode. The control unit 30 may have power consumption changed depending on the sleep mode operation and the wake-up mode operation.

In this case, in one example, the first reference voltage may be larger than or equal to the third reference voltage. Further, the control unit 30 may initially perform a control to directly charge the charging unit 20 through the switch unit 50. Further, after the charging unit 20 is charged and discharged for predetermined times, the control unit 30 controls the switch unit 50 at the time of currently charging the charging unit 20 and at the time of the subsequent charging when the direct charging voltage of the charging unit 20 through the switch unit 50 does not reach the third reference voltage to charge the charging unit 20 from the boosting unit 10. That is, the control unit 30 initially performs a control to directly charge the charging unit 20 from the battery 40 through the switch unit 50 and then when the residual quantity of the battery 40 drops less than a predetermined value, may perform a control to supply the power from the battery to the boosting unit 10 through the switch unit 50 and charge the charging unit 20 with the power boosted by the boosting unit 10.

For example, in one example, during operation of the sleep mode, the control unit 30 uses the voltage charged from the boosting unit 10 or directly charged through the switch unit 50 as the sleep mode power according to the turn on of the switch unit 50 depending on the second reference voltage or less of the charging voltage. For example, the voltage directly charged through the switch unit 50 according to the first turn on-operation of the switch unit 50 depending on the second reference voltage or less of the charging voltage is used as the sleep mode power and the voltage charged from the boosting unit 10 depending on the second turn on-operation of the switch unit 50 depending on the second reference voltage or less of the charging voltage is used as the sleep mode power.

Further, while the power supplied through the switch unit 50 depending on the turn on-operation of the switch unit 50 is used as the sleep mode power, when the charging voltage through the boosting unit 10 is equal to or more than the first reference voltage or the charging voltage directly charged through the switch unit 50 is equal to or more than the third reference voltage, the control unit 30 again turns off or again interrupts the switch unit 50 to interrupt the supply of power from the battery and use the charging voltage of the charging unit 20 as the sleep mode power.

In one embodiment, referring to FIG. 2B, the wake-up device in the wireless network may further include a display unit 70. In this case, the display unit 70 uses the voltage charged to the charging unit 20 from the boosting unit 10 at the time of the turn on-operation of the switch unit 50, the voltage directly charged in the charging unit 20 through the switch unit 50, or the charging voltage of the charging unit 20 at the time of turning off the switch unit 50 as power and displays the information according to the control of the control unit 30. For example, the display unit 70 may be operated only in the wake-up mode. For example, the display unit 70 includes the electronic paper panel to update the information such as price at the time of the wake-up mode and keep the previous image state at the time of the sleep mode.

Further, although not illustrated, the wake-up device in the wireless network may further include the communication unit which communicates with the gateway, the sync, or the like in the wireless network and the communication unit may use the voltage charged to the charging unit 20 from the boosting unit 10 at the time of the turn on-operation of the switch unit 50, the voltage directly charged in the charging unit 20 through the switch unit 50, or the charging voltage of the charging unit 20 at the time of turning off the switch unit 50 as power.

Further, in one example, the control unit 30 keeps the turn-on operation state of the switch unit 50 or switches the switch unit 50 to the turn-on operation state at the time of the wake-up mode operation and may use the voltage charged from the boosting unit 10 or the voltage directly charged through the switch unit 50 as the wake-up mode power. For example, the control unit 30 turns on the switch unit 50 when the sleep mode is switched to the wake-up mode during the use of the charging voltage of the charging unit 20 as power depending on the sleep mode operation to use the voltage charged to the charging unit 20 from the boosting unit 10 or the voltage directly charged through the switch unit 50 as the wake-up mode power. For example, after the sleep mode is switched to the wake-up mode, the control unit 30 turns on the switch unit 50. Further, when the charging voltage of the charging unit 20 drops to the second reference voltage or less during the sleep mode operation and thus the sleep mode is switched to the wake-up mode while the charging unit 20 is charged from the boosting unit 10 or the charging unit 20 is directly charged through the switch unit 50, the control unit 30 keeps the turn on-operation state of the switch unit 50 to use the voltage charged from the boosting unit 10 or the voltage directly charged through the switch u nit 50 as the wake-up mode power.

Further, in another example, the control unit 30 may use the charging voltage of the charging unit 20 as the wake-up mode power when the sleep mode is switched to the wake-up mode while the charging voltage is used as the sleep mode power, continuously perform the monitoring, and may perform a control to charge the charging unit 20 from the boosting unit 10 or directly charge the charging unit 20 through the switch unit 50 when the charging voltage of the charging unit 20 is equal to or less than the second reference voltage.

Next, a power management method of a wake-up device in a wireless network according to a third aspect of the present invention will be described in detail with reference to the accompanying drawings. In this case, the wake-up device in the wireless network according to the first aspect of the present invention as described above and FIGS. 1A and 1B may be referenced and therefore the repeated description thereof may be omitted.

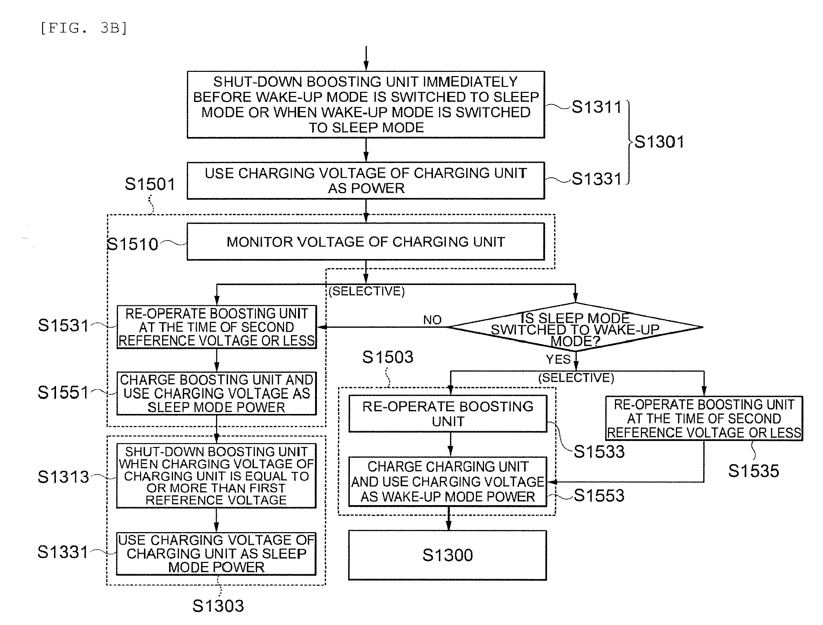

FIG. 3A is a flow chart schematically illustrating a power management method of a wake-up device in a wireless network according to an exemplary embodiment of the present invention and FIG. 3B is a flow chart schematically illustrating a part of a power management method of a wake-up device in a wireless network according to another exemplary embodiment of the present invention.

Referring to FIGS. 3A and/or 3B, the power management method of the wake-up device in the wireless network according to the exemplary embodiment of the present invention may include using the power from the battery (S1100), using the charging power (S1300 and S1301), and reusing the power from the battery (S1500, S1501, and S1503). For example, the power management method according to the exemplary embodiment of the present invention may be a power management method of a tag terminal in an electronic shelf label system.

Referring to FIG. 3A, in the power management method of the wake-up device, in the using of the power from the battery (S1100), the power from the battery is supplied from the battery 40 and is boosted by the boosting unit 10 (S1110). Further, in the using of the power from the battery (S1100), the charging unit 20 is charged with the output of the boosting unit 10 and the voltage charged from the boosting unit 10 is used as the power of the control unit 30 (S1130).

In this case, in one example, the boosting unit 10 may be the booster DC-DC converter. Further, the charging unit 20 may be the high-capacity capacitor 21 or the high-capacity secondary battery.

Next, the using of the charging power (S1300 and S1301) will be described with reference to FIGS. 3A and/or 3B. Although not illustrated, in the using of the charging power (S1300 and S1301), the control unit 30 may monitor the voltage of the charging unit 20. Further, in the using of the charging power (S1300), the boosting unit 10 is shut-down depending on the control of the control unit 30 immediately before the wake-up mode is switched to the sleep mode, when the wake-up mode is switched to the sleep mode, or when the charging unit 20 is charged with the first reference voltage or more to interrupt the supply of power from the battery (S1310). Further, in the using of the charging power (S1300 and S1301), the charging voltage of the charged charging unit 20 is used as the power of the control unit 30 (S1330 and S1331).

For example, when the wake-up mode is switched to the sleep mode depending on the ending of the wake-up mode while the voltage charged from the boosting unit 10 is used as power in the wake-up mode, in the using of the charging power (S1300 and S1301), the control unit 30 completes the operation of the wake-up device in the wake-up mode and then shuts-down the boosting unit 10 to interrupt the consumption of the power from the battery and switches the wake-up mode to the sleep mode or shuts-down the boosting unit 10 when the wake-up mode is switched to the sleep mode to interrupt the consumption of the power from the battery (S1310 and S1311). When the boosting unit 10 is shut-down, the control unit 30 may use the charging voltage of the charging unit 20 as the sleep mode power. When the wake-up mode is switched to the sleep mode, the control unit 30 performs only the wake-up waiting operation and before the wake-up mode is switched to the sleep mode, shuts-down the boosting unit 10 and may switch the wake-up mode to the sleep mode. Further, when the wake-up mode is switched to the sleep mode, the control unit 30 may perform the shut-down operation of the boosting unit 10. Further, in the using of the charging power (S1300), when the voltage charged in the charging unit 20 is equal to or more than the first reference voltage during the monitoring of the voltage of the charging unit 20, the control unit 30 shuts-down the boosting unit 10 to prevent the power from the battery from being consumed and uses the charging voltage of the charging unit 20 as the power (S1310). For example, the control unit 30 may have power consumption changed depending on the sleep mode operation and the wake-up mode operation.

The first reference voltage is higher than the subsequent second reference voltage. For example, the first reference voltage may be a full charging voltage of the charging unit 20 or may be a predetermined voltage which is larger than a minimum voltage to perform the wake-up operation, the sleep mode operation, or the like of the wake-up device and smaller than an operation maximum voltage of the control unit 30. For example, the first reference voltage may be changed to be gradually reduced depending on the charging and discharging repetition of the charging unit 20.

Next, referring to FIGS. 3A and/or 3B, in the reusing the power from the battery (S1500 and S1501), when the charging voltage is equal to or less than the second reference voltage during the use and monitoring of the charging voltage, the control unit 30 re-operates the boosting unit 10 (S1530 and S1531). In this case, the second reference voltage may be, for example, a minimum voltage to perform the wake-up operation or the sleep mode operation of the wake-up device or a large voltage as much as a predetermined buffer section than minimum voltage. For example, in the reusing of the power from the battery of FIG. 3A (S1500), when the charging voltage of the charging unit 20 is equal to or less than the second reference voltage, the re-operation control of the boosting unit 10 may be performed in the sleep mode or/and the wake-up mode. In the reusing of the power from the battery of FIG. 3B (S1501), when the charging voltage of the charging unit 20 is equal to or less than the second reference voltage in the sleep mode state, the re-operation of the boosting unit 10 (S1531) is illustrated. For example, the control unit 30 may have power consumption changed depending on the sleep mode operation and the wake-up mode operation.

Referring to FIG. 3B, in one example, in the reusing of the power from the battery (S1501), during operation of the sleep mode, the control unit 30 uses the voltage charged from the boosting unit 10 as the sleep mode power at the time of the re-operation of the boosting unit 10 (S1551).

Further, Referring to FIG. 3B, in one example, when the charging voltage of the charging unit 20 charged in the reusing of the power from the battery (S1501) is equal to or more than the first reference voltage, the control unit 30 again shuts-down the boosting unit 10 (S1313) and uses the charging voltage as the sleep mode power (S1331). That is, in the reusing of the power from the battery (S1501), when the charging voltage is equal to or more than the first reference voltage, the using of the charging power (S1303) which uses the charging voltage as the sleep mode power is performed.

Further, referring to FIG. 3B, in one example, the using of the charging power (S1301) is performed depending on the switching to the sleep mode (S1311). In this case, the charging voltage of the charging unit 20 is used as the sleep mode power (S1331). Next, in the reusing of the power from the battery (S1503), when the sleep mode is switched to the wake-up mode, the control unit 30 re-operates the boosting unit 10 (S1533) and may use the voltage charged from the boosting unit 10 as the wake-up mode power (S1553). For example, after the sleep mode is switched to the wake-up mode, the control unit 30 may re-operate the boosting unit 10 (S1300).

Further, referring to FIG. 3B, in another example, in the reusing of the power from the battery, the control unit 30 uses the charging voltage of the charging unit 20 as the wake-up mode power when the sleep mode is switched to the wake-up mode while the charging voltage is used as the sleep mode power and may continuously perform the monitoring. In this case, the control unit 30 may re-operate the boosting unit 10 when the charging voltage of the charging unit 20 during the monitoring is equal to or less than the second reference voltage (S1535).

Next, a power management method of a wake-up device in a wireless network according to a fourth aspect of the present invention will be described in detail with reference to the accompanying drawings. In this case, the wake-up device in the wireless network according to the second aspect of the present invention, the power management method of the wake-up device in the wireless network according to the third aspect of the present invention, and FIGS. 2A, 2B, 3A, and 3B may be referenced and therefore the repeated description thereof will be omitted.

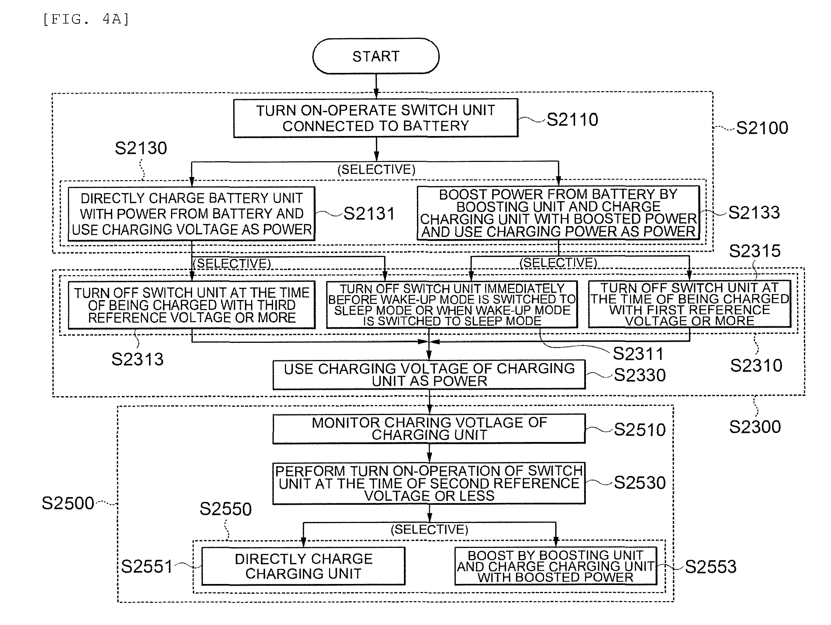

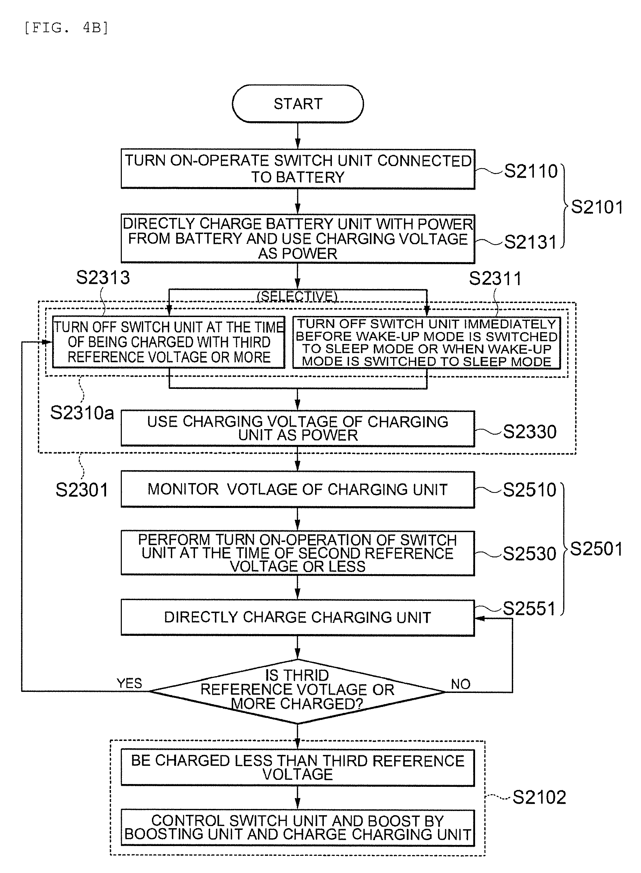

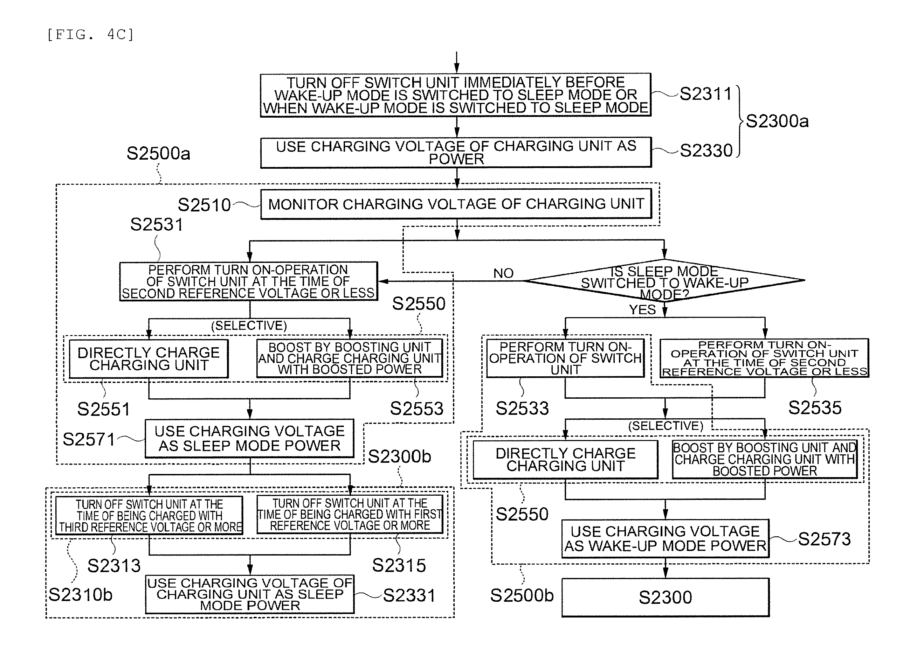

FIG. 4A is a flow chart schematically illustrating a power management method of a wake-up device in a wireless network according to still another exemplary embodiment of the present invention and FIGS. 4B and 4C each are flow charts schematically illustrating a part of a power management method of a wake-up device in a wireless network according to still yet another exemplary embodiment of the present invention.

Referring to FIGS. 4A, 4B, and/or 4C, the power management method of the wake-up device in the wireless network according to the exemplary embodiment of the present invention may include using the power from the battery (S2100 and S2101), using the charging power (S2300, S2301, and S2300a), and reusing the power from the battery (S2500, S2501, S2500a, and S2500b). For example, the power management method according to the exemplary embodiment of the present invention may be a power management method of a tag terminal in an electronic shelf label system.

Referring to FIGS. 4A and/or 4B, in the power management method of the wake-up device, in the using of the power from the battery (S2100), the power from the battery is directly supplied to the charging unit 20 to charge the charging unit 20 (S2130 and S2131) or supplied to the boosting unit 10 to charge the charging unit 20 with the voltage boosted by the boosting unit 10 (S2130), according to the turn on-operation of the switch unit 50 which is connected to the battery 40 (S2110). Further, in the using of the power from the battery (S2100 and S2101), the voltage charged in the charging unit 20 is used as the power of the control unit 30 (S2130 and S2131).

In this case, in one example, the boosting unit 10 may be the booster DC-DC converter. Further, the charging unit 20 may be the high-capacity capacitor or the high-capacity secondary battery.

Next, the using of the charging power (S2300, S2301, and S2300a) will be described with reference to FIGS. 4A, 4B, and/or 4B. Although not illustrated, in the using of the charging power, the control unit 30 may monitor the voltage of the charging unit 20. Further, in the using of the charging power (S2300, S2301, and S2300a), immediately before the wake-up mode is switched to the sleep mode, when the wake-up mode is switched to the sleep mode (see S2311), when the charging unit 20 charged by the boosting unit 10 is charged with the first reference voltage or more (see S2315) or the charging unit 20 directly charged through the switch unit 50 is charged with the third reference voltage or more (see S2313), the control unit 30 turns off the switch unit 50 to interrupt the supply of power from the battery 40 (S2310 and S2310a). Further, in the using of the charging power (S2300, S2301, S2300a), the charging voltage of the charging unit 20 is used as the power of the control unit 30 depending on the interruption of the supply of power from the battery. In this case, the first reference voltage and the third reference voltage are higher than a subsequent second reference voltage.

For example, referring to FIGS. 4A, 4B, and/or 4C, in the using of the charging power (S2300, S2301, and S2300a), the control unit 30 completes the operation of the wake-up device in the wake-up mode when the wake-up mode is switched to the sleep mode depending on the ending of the wake-up mode while the voltage charged in the charging unit 20 in the wake-up mode is used as power and then turns off the switch unit 50 to interrupt the supply of power from the battery 40 and switch the wake-up mode to the sleep mode or turns off the switch unit 50 when the wake-up mode is switched to the sleep mode to interrupt the supply of power from the battery 40 (S2311). In this case, the control unit 30 may use the charging voltage of the charging unit 20 as the sleep mode power. For example, the control unit 30 turns off the switch unit 50 immediately before the wake-up mode is switched to the sleep mode or turns off the switch unit 50 in which the wake-up mode is switched to the sleep mode or when the wake-up mode is switched to the sleep mode (S2311).

Further, referring to FIG. 4A, in the using of the charging power (S2300), when the charging unit 20 charged by the boosting unit 10 is equal to or more than the first reference voltage during the monitoring of the voltage of the charging unit 20, the control unit 30 turns off the switch unit 50 to interrupt the supply of power from the battery (S2315) and uses the charging voltage of the charging unit 20 as the power (S2330).

Further, referring to FIGS. 4A and 4B, in the using of the charging power (S2300 and S2301), when the charging unit 20 directly charged through the switch unit 50 is equal to or more than the third reference voltage during the monitoring of the voltage of the charging unit 20, the control unit 30 turns off the switch unit 50 to interrupt the supply of power from the battery (S2313) and uses the charging voltage of the charging unit 20 as the power (S2330).

In this case, in one example, the first reference voltage may be larger than or equal to the third reference voltage. In this case, the first reference voltage may be the full charging voltage of the charging unit 20 or may be a predetermined voltage which is larger than the minimum voltage to perform the wake-up operation, the sleep mode operation, or the like of the wake-up device and smaller than the operation maximum voltage of the control unit 30. Further, the third reference voltage may be a voltage which is equal to the reference voltage of the battery 40 or may be, for example, a predetermined voltage which is larger than the minimum voltage to perform the wake-up operation, the sleep mode operation, or the like of the wake-up device and smaller than the operation maximum voltage of the control unit 30 and the reference voltage of the battery 40. For example, the first reference voltage and/or the third reference voltage may be changed to be gradually reduced depending on the charging and discharging repetition of the charging unit 20.

Next, referring to FIGS. 4A, 4B, and/or 4C, in the reusing of the power from the battery (S2500, S2501, and S2500a), when the charging voltage of the charging unit 20 is equal to or less than the second reference voltage during the use and monitoring of the charging voltage (S2510), the control unit 30 turns on the switch unit 50 (S2530 and S2531) to perform a control to directly charge the charging unit 20 through the switch unit 50 (S2550 and S2551) or a control to charge the charging unit 20 from the boosting unit 10 (S2550 and S2553). In this case, the second reference voltage may be, for example, a minimum voltage to perform the wake-up operation or the sleep mode operation of the wake-up device or a large voltage as much as a predetermined buffer section than minimum voltage.

For example, in the reusing of the power from the battery (S2500), when the charging voltage of the charging unit 20 is equal to or less than the second reference voltage, the turn on operation control of the boosting unit 50 may be performed in the sleep mode or/and the wake-up mode. The control unit 30 may have power consumption changed depending on the sleep mode operation and the wake-up mode operation.

In one example, the first reference voltage may be larger than or equal to the third reference voltage. In this case, referring to FIG. 4B, in an initial using of the power from the battery (S2101), the control unit 30 initially performs a control to directly charge the charging unit 20 through the switch unit 50. Further, referring to FIG. 4B, in the using of the initial charging power (S2301), immediately before the wake-up mode is switched to the sleep mode or when the wake-up mode is switched to the sleep mode (see S2311) or when the charging unit 20 directly charged through the switch unit 50 is charged with the third reference voltage or more (see S2313), the charging voltage charged in the charging unit 20 is used as power (S2330). In addition, referring to FIG. 4B, in the initial reusing of the power from the battery (S2501), the control unit 30 performs a control to directly charge the charging unit 20 through the switch unit 50 (S2551) and reuses the voltage charged from the boosting unit 10.

In this case, referring to FIG. 4B, when the direct charging voltage of the charging unit 20 through the switch unit 50 does not reach the third reference voltage during the repetitive circulation of the reusing of the power from the battery (S2501) and the using of the charging power (S2301), the control unit 30 controls the switch unit 50 to charge the charging unit 20 from the boosting unit 10 and may reuse the voltage charged from the boosting unit 10 at the time of currently charging the charging unit 20 and at the time of charging the charging unit 20 in the reusing of the power from the battery depending the subsequent repetition circulation (S2102).

Further, referring to FIG. 4C, in one example, in the reusing of the power from the battery (S2500a), during operation of the sleep mode, the control unit 30 may use the voltage charged in the charging unit 20 from the boosting unit 10 or the voltage directly charged through the switch unit 50 depending on the turn on of the switch unit 50 as the sleep mode power (S2571).

In this case, in the reusing of the power from the battery (S2500a), when the charging voltage charged through the boosting unit 10 is equal to or more than the first reference voltage (see S2315) or the charging voltage directly charged through the switch unit 50 is equal to or more than the third reference voltage (see S2313), the control unit 30 again turns off the switch unit 50 (S2310a) and may use the charging voltage as the sleep mode power (S2331). That is, in the using of the charging power (S2300b) after the reusing of the power from the battery (S2500a), the control unit 30 again turns off the switch unit 50 (S2310a) and may use the charging voltage as the sleep mode power (S2331).

Referring to FIG. 4C, in another example, the using of the charging power (S2300) is performed depending on the switching to the sleep mode (S2311). In this case, in the reusing of the power from the battery (S2500b), when the sleep mode is switched to the wake-up mode, the control unit 30 switches the switch unit 50 to the turn on-operation state (S2533) and may use the voltage charged in the charging unit from the boosting unit 10 or the voltage directly charged through the switch unit 50 as the wake-up mode power (S2573). For example, after the sleep mode is switched to the wake-up mode, the control unit 30 may re-operate the switch unit 50 (S2300).

Further, referring to FIG. 4C, in another example, in the reusing of the power from the battery, the control unit 30 uses the charging voltage of the charging unit 20 as the wake-up mode power when the sleep mode is switched to the wake-up mode while the charging voltage is used as the sleep mode power and may continuously perform the monitoring. In this case, the control unit 30 may perform a control to charge the charging unit 20 from the boosting unit 10 or directly charge the charging unit 20 through the switch unit 50 when the charging voltage of the charging unit 20 is equal to or less than the second reference voltage during the monitoring (see S2535 and S2550).

According to the exemplary embodiments of the present invention, it is possible to efficiently use the battery residual quantity by adding the boosting unit, in particular, monitor the charging voltage of the charging unit and more efficiently manage power from the battery by interrupting or resuming the supply of power from the battery based on the monitored result.

The accompanying drawings and the above-mentioned exemplary embodiments have been illustratively provided in order to assist in understanding of those skilled in the art to which the present invention pertains rather than limiting a scope of the present invention. In addition, exemplary embodiments according to a combination of the above-mentioned configurations may be obviously implemented by those skilled in the art. Therefore, various exemplary embodiments of the present invention may be implemented in modified forms without departing from an essential feature of the present invention. In addition, a scope of the present invention should be interpreted according to claims and includes various modifications, alterations, and equivalences made by those skilled in the art.

## Claims

1. A wake-up device in a wireless network, comprising:
a boosting unit supplied with power from a battery and boosting the power;
a charging unit charged by being supplied with an output of the boosting unit; and
a control unit monitoring a charging voltage of the charging unit, using a voltage charged from the boosting unit as power, shutting-down the boosting unit immediately before a wake-up mode is switched to a sleep mode, when the wake-up mode is switched to the sleep mode, or when the charging unit is charged with the first reference voltage or more, to use the charging voltage of the charging unit as power, and re-operating the boosting unit when the charging voltage is equal to or less than a second reference voltage during the use of the charging voltage.

2. The wake-up device according to claim 1, wherein during operation of the sleep mode, the control unit uses the voltage charged from the boosting unit as a sleep mode power when the boosting unit is re-operated depending on the second reference voltage or less, and again shuts-down the boosting unit when the charging voltage is equal to or more than the first reference voltage to use the charging voltage as the sleep mode power.

3. The wake-up device according to claim 1, further comprising:
a display unit using the voltage charged from the boosting unit at the time of an operation of the boosting unit or the charging voltage of the charging unit at the time of the shut-down of the boosting unit as power and displaying information according to the control of the control unit.

4. The wake-up device according to any one of claims 1 to 3, wherein the control unit keeps or switches the boosting unit in or to an operation state at the time of the operation of the wake-up mode and uses the voltage charged from the boosting unit as a wake-up mode power.

5. The wake-up device according to any one of claims 1 to 3, wherein the control unit uses the charging voltage as a wake-up mode power when the sleep mode is switched to the wake-up mode during the use of the charging voltage as the sleep mode power, continuously performs the monitoring, and re-operates the boosting unit when the charging voltage is equal to or less than the second reference voltage.

6. A wake-up device in a wireless network, comprising:
a switch unit connected to a battery and interrupting a supply of power from the battery or supplying power from the battery to a boosting unit or a charging unit depending on switching;
a boosting unit supplied with the power from the battery through the switch unit and boosting the power;
a charging unit directly supplied with the power from the battery through the switch unit or charged by being supplied with the output of the boosting unit; and
a control unit monitoring a charging voltage of the charging unit, using a voltage charged in the charging unit as power, turning off the switch unit immediately before a wake-up mode is switched to a sleep mode, when the wake-up mode is switched to the sleep mode, when the charging unit charged by the boosting unit is charged with the first reference voltage or more, or when the charging unit directly charged through the switch unit is charged with a third reference voltage or more to interrupt a supply of power from the battery and use the charging voltage of the charging unit as power, and turning on the switch unit when the charging voltage is equal to or less than a second reference voltage during the use of the charging voltage to perform a control to charge the charging unit from the boosting unit or directly charge the charging unit through the switch unit.

7. The wake-up device according to claim 6, wherein the first reference voltage is larger than or equal to the third reference voltage, and
the control unit initially performs a control to directly charge the charging unit through the switch unit and controls the switch unit at the time of currently charging the charging unit and at the time of the subsequent charging when the direct charging voltage of the charging unit through the switch unit does not reach the third reference voltage to charge the charging unit from the boosting unit.

8. The wake-up device according to claim 6, wherein during operation of the sleep mode, the control unit uses the voltage charged from the boosting unit or directly charged through the switch unit as a sleep mode power according to a turn on of the switch unit depending on the second reference voltage or less, and again turns off the switch unit when the charging voltage through the boosting unit is equal to or more than the first reference voltage or when the charging voltage directly charged through the switch unit is equal to or more than the third reference voltage to use the charging voltage as the sleep mode power.

9. The wake-up device according to claim 6, further comprising:
a display unit using the voltage charged from the boosting unit or directly charged through the switch unit at the time of a turn on operation of the switch unit or the charging voltage of the charging unit at the time of a turn off of the switch unit as power and displaying information according to the control of the control unit.

10. The wake-up device according to any one of claims 6 to 9, wherein the control unit keeps the turn on-operation state of the switch unit or switches the switch unit to an turn on-operation state at the time of a wake-up mode operation, and uses the voltage charged from the boosting unit or directly charged through the switch unit as a wake-up mode power.

11. The wake-up device according to any one of claims 6 to 9, wherein the control unit uses the charging voltage as the wake-up mode power when the sleep mode is switched to the wake-up mode during the use of the charging voltage as the sleep mode power, continuously performs the monitoring, and performs a control to charge the charging unit from the boosting unit or directly charge the charging unit through the switch unit when the charging voltage is equal to or less than the second reference voltage.

12. The wake-up device according to any one of claims 1 to 11, wherein the boosting unit is a booster DC-DC converter and
the charging unit is a high-capacity capacitor or a high-capacity secondary battery.

13. The wake-up device according to any one of claims 1 to 11, wherein the wake-up device is a tag terminal in an electronic shelf label system.

14. A power management method of a wake-up device in a wireless network, comprising:
using power from a battery in which a boosting unit is supplied with the power from the battery and boosts the power, a charging unit is charged by being supplied with an output of the boosting unit, and uses a voltage charged from the boosting unit as power of a control unit;
using charging power in which the control unit monitors a charging voltage of the charging unit and shuts-down the boosting unit immediately before a wake-up mode is switched to a sleep mode, when the wake-up mode is switched to the sleep mode, or when the charging unit is charged with the first reference voltage or more to use the charging voltage of the charging unit as power of the control unit; and
reusing the power from the battery in which the control unit re-operates the boosting voltage when the charging voltage is equal to or less than a second reference voltage during the use and monitoring of the charging voltage.

15. The power management method according to claim 14, wherein in the reusing of the power from the battery, the control unit uses the voltage charged from the boosting unit as a sleep mode power at the time of the re-operation of the boosting unit during operation of the sleep mode, and
when the charging voltage of the charging unit charged in the reusing of the power from the battery is equal to or more than the first reference voltage, the control unit again shuts-down the boosting unit and uses the charging voltage as the sleep mode power.

16. The power management method according to claim 14 or 15, wherein the using of the charging power is performed depending on the switching to the sleep mode, and
in the reusing of the battery power, when the sleep mode is switched to the wake-up mode, the control unit re-operates the boosting unit and uses the voltage charged from the boosting unit as a wake-up mode power.

17. A power management method of a wake-up device in a wireless network, comprising:
using power from a battery in which the power from the battery is directly supplied to a charging unit to charge the charging unit or supplied to a boosting unit to charge the charging unit with a voltage boosted by the boosting unit, according to a turn on-operation of a switch unit connected to the battery, and the voltage charged in the charging unit is used as power of a control unit;
using charging power in which the control unit monitors a charging voltage of the charging unit, turns off the switch unit immediately before a wake-up mode is switched to a sleep mode, when the wake-up mode is switched to the sleep mode, when the charging unit charged by the boosting unit is charged with the first reference voltage or more, or when the charging unit directly charged through the switch unit is charged with a third reference voltage or more to interrupt a supply of power from the battery and use the charging voltage of the charging unit as power of the control unit; and
reusing the power from the battery in which the control unit turns on the switch unit when the charging voltage of the charging unit is equal to or less than a second reference voltage during the use and monitoring of the charging voltage to perform a control to directly charge the charging unit through the switch unit or charge the charging unit from the boosting unit.

18. The power management method according to claim 17, wherein the first reference voltage is larger than or equal to the third reference voltage,
in an initial using of the power from the battery, the control unit performs a control to directly charge the charging unit through the switch unit, in the using of an initial charging power, the control unit uses the charging voltage as power immediately before the wake-up mode is switched to the sleep mode, when the wake-up mode is switched to the sleep mode, or when the charging unit directly charged through the switch unit is charged with the third reference voltage or more, and in an initial reusing of the power from the battery, the control unit performs a control to directly charge the charging unit through the switch unit and reuses the charging voltage; and
when the direct charging voltage of the charging unit through the switch unit does not reach the third reference voltage during the repetitive circulation of the reusing of the power from the battery and the using of the charging power, the control unit controls the switch unit at the time of currently charging the charging unit and at the time of charging the charging unit in the reusing of the power from the battery depending on the repetitive circulation thereafter to perform a control to charge the charging unit from the boosting unit and reuse the charging voltage.

19. The power management method according to claim 17, wherein in the reusing of the power from the battery, during operation of the sleep mode, the control unit uses the voltage charged from the boosting unit or directly charged through the switch unit depending on the turn on of the switch unit as the sleep mode power, and
in the reusing of the power from the battery, the control unit again turns off the switch unit to use the charging voltage as the sleep mode power when the charging voltage charged through the boosting unit is equal to or more than the first reference voltage or when the voltage directly charged through the switch unit is equal to or more than the third reference voltage.

20. The power management method according to any one of claims 17 to 19, wherein the using of the charging power is performed depending on the switching to the sleep mode, and
in the reusing of the power from the battery, when the sleep mode is switched to the wake-up mode, the control unit switches the switch unit to a turn on-operation state and uses the voltage charged from the boosting unit or directly charged through the switch unit as a wake-up mode power.
